**Europäisches Patentamt**

(19) **European Patent Office**

**Office européen des brevets**

(11) Veröffentlichungsnummer: **0 178 417**

**B1**

(12) # EUROPÄISCHE PATENTSCHRIFT

(45) Veröffentlichungstag der Patentschrift:
02.08.89

(51) Int. Cl.⁴: **B 23 B 29/04**

(21) Anmeldenummer: **85110323.4**

(22) Anmeldetag: **18.08.85**

(54) **Teilbares Werkzeug für die spanabhebende Bearbeitung.**

(30) Priorität: **18.08.84 DE 8424498 U**
**16.08.85 DE 8523488 U**

(43) Veröffentlichungstag der Anmeldung:
**23.04.86 Patentblatt 86/17**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
**DD-A-224 250**
**DE-A-1 552 388**
**DE-A-3 318 603**
**DE-B-2 234 389**
**US-A-3 980 443**

(73) Patentinhaber: **Werthwein, Gustav, Plattenweg 6,**
**D-7143 Vaihingen (DE)**
Patentinhaber: **Grossmann, Ernst,**
**Krümmlingstrasse 18, D-7143 Vaihingen (DE)**

(72) Erfinder: **Werthwein, Gustav, Plattenweg 6, D-7143**
**Vaihingen (DE)**
Erfinder: **Grossmann, Ernst, Krümmlingstrasse 18,**
**D-7143 Vaihingen (DE)**

(74) Vertreter: **Kastner, Hermann, Dipl.- Ing.,**
**Osterholzallee 89, D-7140 Ludwigsburg (DE)**

EP 0 178 417 B1

LIBER, STOCKHOLM 1989

## Beschreibung

### Teilbares Werkzeug für die spanabhebende Bearbeitung

Bei der spanabhebenden Bearbeitung von Werkstücken aller Art, sei es bei der Außenbearbeitung oder sei es bei der Innenbearbeitung der Werkstücke, ist es oft erwünscht, daß unterschiedliche Bearbeitungsvorgänge in einer Einspannung des Werkstückes durchgeführt werden. Dafür werden Werkzeuge mit unterschiedlicher Ausbildung und Anordnung der Werkzeugschneide eingesetzt. Um die Stillstandszeiten für das Wechseln der Werkzeuge zu verringern, geht man in zunehmendem Maße dazu über, nicht mehr die ganzen Werkzeuge auszuwechseln, sondern teilbare Werkzeuge einzusetzen, bei denen ein Werkzeug-Grundkörper mit der Werkzeugmaschine verbunden bleibt und lediglich ein Werkzeugkopf ausgetauscht wird, der die jeweils benötigte Werkzeugschneide trägt. Diese beiden voneinander trennbaren Werkzeugteile werden mittels einer Kupplungsvorrichtung miteinander verbunden.

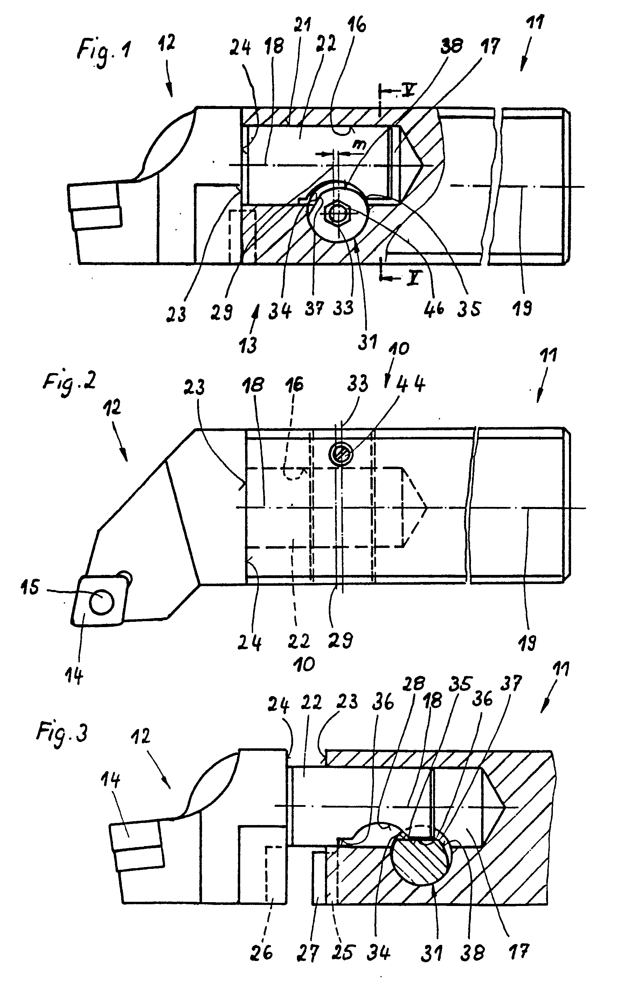

Bei einem bekannten teilbaren Werkzeug dieser Art, (US-A-3 980 443) hat der Werkzeugkopf eine näherungsweise quaderförmige Gestalt. Der Grundkörper weist dafür an seinem vorderen Ende einen darauf abgestimmten Absatz mit ebener Auflagefläche für den Werkzeugkopf auf. Die Kupplungsvorrichtung weist Führungsflächen und Spannflächen an den relativ zueinander bewegbaren Teilen des Werkzeugkopfes und des Grundkörpers auf (Fig. 1 bis 7).

Am Grundkörper werden die Führungsflächen durch die lotrecht ausgerichteten Seitenwände einer in der Längsrichtung des Grundkörpers verlaufenden Führungsnut in der Auflagefläche des Absatzes gebildet. Dementsprechend werden am Werkzeugkopf die Führungsflächen durch die ebenfalls lotrecht ausgerichteten Seitenwände einer in seiner Längsrichtung verlaufenden Führungsrippe gebildet, die an der Unterseite des Werkzeugkopfes gelegen ist, wobei der Außenabstand der Seitenwände der Führungsrippe auf den lichten Abstand der Seitenwände der Führungsnut abgestimmt ist. Die Führungsrippe am Werkzeugkopf hat eine etwas geringere Höhe als die Tiefe der Nut am Grundkörper.

Am Grundkörper und am Werkzeugkopf sind jeweils zwei Spannflächen vorhanden. Am Grundkörper wird die erste Spannfläche durch die vom vorderen Ende des Grundkörpers abgekehrte vordere Seitenwand einer entlang dem hinteren Rand des Absatzes verlaufenden Quernut in der Auflagefläche gebildet, in die in der Mitte die längsverlaufende Führungsnut einmündet. Die zugehörige erste Spannfläche am Werkzeugkopf wird durch die vordere Seitenfläche einer Querrippe gebildet, die an der Unterseite des Werkzeugkopfes entlang dessen hinterem Rand gelegen ist. Zwischen dieser Querrippe und dem hinteren Ende der längsverlaufenden Führungsrippe ist eine Lücke vorhanden, damit die vordere Seitenfläche der Querrippe durchgehend bearbeitet werden kann.

Am Werkzeugkopf wird die zweite Spannfläche durch zwei Flächenabschnitte der Rückseite des Werkzeugkopfes gebildet, die im Bereich des Seitenrandes der Rückseite gelegen sind. Sie sind parallel zueinander ausgerichtet und fluchten in der Querrichtung miteinander. Die beiden Flächenabschnitte sind gegenüber der Lotrechten in der Weise geneigt, daß sie von unten nach oben ansteigend von der Rückseite aus um eine gewisse Strecke nach vorn verlaufen. Vom oberen Rand dieser geneigten Spannfläche aus verläuft der übrige Teilabschnitt der Rückseite lotrecht aufwärts. Anders ausgedrückt, weist dadurch der Werkzeugkopf an seiner Rückseite zwei von der Oberseite aus lotrecht abwärtsverlaufende Ausnehmungen auf, die nach unten hin durch je eine der schrägverlaufenden Spannflächen abgeschlossen werden.

Am Grundkörper wird die zweite Spannfläche durch die Umfangsfläche zweier Exzenterkörper gebildet, deren Exzenterachsen miteinander fluchten. Sie sind an je einem Ende eines gemeinsamen kreiszylindrischen Achskörpers angeordnet sind, mit dem sie aus einem Stück gefertigt sind. Die Längsachse des Achskörpers und der beiden Exzenterkörper ist waagerecht ausgerichtet. Der Achskörper ist lose in eine nach vorn offene Lagermulde eingelegt, die an der Vorderseite des Absatzes des Grundkörpers angebracht ist und die für den Achskörper eine Lagerfläche in Form einer hohlen Halbkreiszylinderfläche aufweist, an die zwei parallel zueinander verlaufende ebene Seitenwände der Lagermulde anschließen, die sich vom Rand der Halbkreiszylinderfläche aus um wenigstens das Halbmessermaß dieser Halbkreiszylinderfläche nach vorn erstrecken. Der Achskörper wird mittels einer dünnen Zunge in der offenen Lagermulde festgehalten.

Im Bereich der beiden Exzenterkörper weist der Grundkörper je eine kreiszylindrische Ausnehmung auf, deren Zylinderachse mit der Achse des Achskörpers fluchtet. Diese Ausnehmungen haben eine so große lichte Weite, daß die Exzenterkörper sich darin frei drehen können.

Die Exzenterkörper ragen um ihr radiales Übermaß gegenüber dem Achskörper nach vorn über die Vorderseite des Absatzes hinaus bis in die lotrechten Ausnehmungen an der Rückseite des Werkzeugkopfes hinein. Die Höhenlage des Achskörpers mit den Exzenterkörpern und die Höhenlage der schrägen Spannflächenabschnitte am Werkzeugkopf sind aufeinander so abgestimmt, daß in einer bestimmten Drehstellung der Exzenterkörper ihre Umfangsfläche an dem zugeordneten Spannflächenabschnitt des Werkzeugkopfes anliegt und auf diesen eine Spannkraft in Richtung der Flächennormale der schrägen Spannflächenabschnitte ausübt. Die lotrechte Kraftkomponente drückt den Werkzeugkopf mit seiner Unterseite auf die Auflagefläche des Grundkörpers. Die waagerechte Kraftkomponente drückt den Werkzeugkopf mit der Vorderseite seiner Querrippe gegen die vordere Seitenwand der Quernut in der Auflagefläche des Grundkörpers. In seitlicher Richtung wird der Werkzeugkopf durch den Eingriff seiner Führungsrippe an seiner Unterseite in die Führungsnut in der Aufnahmefläche des Grundkörpers geführt. Ein gewisses Seitenführungsmoment entsteht dadurch, daß die beiden Exzenterkörper von der Mittelebene der Führungsrippe und der Führungsnut einen gewissen seitlichen Abstand haben und die von ihnen auf den Werkzeugkopf ausgeübte Spannkraft dadurch ein Kräftepaar ergibt.

Damit der Werkzeugkopf an den Exzenterkörpern vorbei mit seiner Querrippe in die Quernut des Grundkörpers eingesetzt werden kann, sind die Exzenterkörper im Umfangsbereich der kleinsten Exzentrizität bis auf den Halbmesser des Achskörpers abgeflacht. Somit fehlt ein beträchtlicher Klemmbereich der Exzenterkörper. Vom verbleibenden Umfangsbereich kann derjenige beiderseits der Stelle der größten Exentrizität ebenfalls nicht ausgenutzt werden, weil dort der Grandient des Achsabstandes der Umfangsfläche bis auf Null abnimmt. Das vermindert den zulässigen Toleranzbereich bezüglich der Lage der ersten Spannflächen und der zweiten Spannflächen je untereinander und bezüglich dem Abstand zwischen der ersten Gruppe der Spannflächen und der zweiten Gruppe der Spannflächen. Das wiegt umso schwerer, als die schrägen Spannflächen am Werkzeugkopf wegen des zwischen ihnen gelegenen Werkstoffteils nicht gemeinsam, sondern nur einzeln bearbeitet werden können. Dadurch können Toleranzen der beiden schrägen Spannflächen untereinander auftreten, die nicht ausgeglichen werden können. Dadurch entsteht auch die Gefahr ungleicher Spannkräfte an beiden Seitenrändern des Werkzeugkopfes.

Die bei den Exzenterkörpern auftretenden Spannkräfte können wegen ihrer fliegenden Anordnung am Achskörper nur über diesen auf den Grundkörper übertragen werden. Dadurch wird der Achskörper auf Biegung und an der Übergangsstelle zu den Exzenterkörpern auf Abscherung beansprucht. Weil durch den scharfen Absatz an der Übergangsstelle die Kerbwirkung insbesondere in Bezug auf die Biegebelastung eine sehr starke Überhöhung der Beanspruchung des Werkstoffes zur Folge hat, ist die Belastbarkeit dieser Spannvorrichtung stark begrenzt.

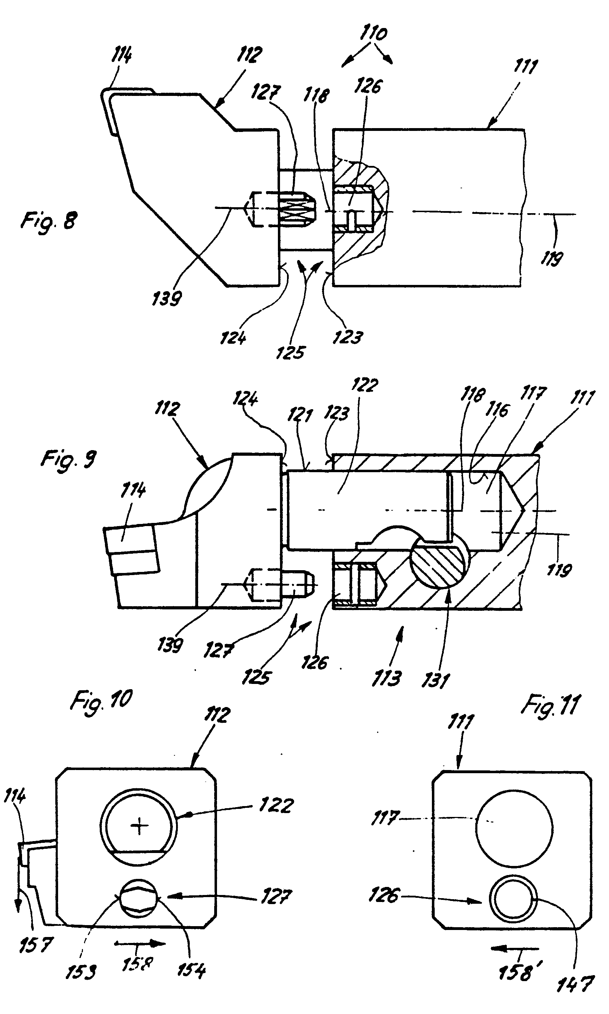

Bei einer anderen Ausführungsform des bekannten teilbaren Werkzeuges (Fig. 9 bis 11) ist der Werkzeugkopf auf einen Einsatz aus einer Schneidplatte und einer Tragscheibe reduziert. Die Führungsflächen für diesen Schneideneinsatz werden am Grundkörper durch eine ebene Auflagefläche und durch einen Abschnitt einer nach oben sich erweiternden Kegelstumpfmantelfläche gebildet, die auf die ebene Unterseite des Einsatzes und dessen kegelstumpfförmige Umfangsfläche abgestimmt sind. Der Schneideneinsatz wird mittels eines Spannbolzens in Form eines Kopfbolzens auf den Grundkörper aufgespannt, der sich durch ein mittiges Durchgangsloch im Schneideneinsatz hindurcherstreckt und bis in ein damit fluchtendes Durchgangsloch im Grundkörper hineinerstreckt. Die Spannfläche am Spannbolzen ist als Abschnitt einer Kreiszylinderfläche ausgebildet, deren Zylinderachse rechtwinklig zur Längsachse des Spannbolzens ausgerichtet ist. Am Grundkörper ist neben dem lotrechten Durchgangsloch für den Spannbolzen ein waagerecht ausgerichtetes kreiszylindrisches Führungsloch für einen Spannkörper vorhanden. Dieser Spannkörper hat einen sinngemäß gleichen Aufbau wie der Spannkörper der ersten Ausführungsform mit der Abwandlung, daß hier nur ein Exzenterkörper vorhanden ist, der den mittleren Längenabschnitt des Spannkörpers einnimmt und daß daran, nach den beiden Enden hin, je ein kreiszylindrischer Lagerkörper anschließt. Damit dieser Spannkörper in das Führungsloch eingeführt werden kann, hat der mittlere Längenabschnitt mit dem Exzenterkörper einen Durchmesser, der kleiner ist als der Durchmesser der beiden kreiszylindrischen Lagerkörper, und zwar um so viel kleiner, daß die Umfangsstelle mit der größten Exzentrizität nicht über die axiale Aufrißfigur der Lagerkörper hinausragt. Davon ausgehend ist der Exzenterkörper so ausgebildet, daß im Bereich seiner kleinsten Exzentrizität der Halbmesser der Umfangsfläche nicht größer ist, als der Abstand der Längsachse des Spannkörpers von der ihm nächstgelegenen Mantellinie des lotrechten Durchgangsloches im Grundkörper für den Spannbolzen, damit dessen zylindrischer Schaft an dem Spannkörper vorbei eingeführt werden kann.

Wenn der Spannbolzen in der richtigen Drehstellung in das lotrechte Durchgangsloch am Grundkörper eingesetzt ist, wird der Spannkörper um seine Zylinderachse gedreht, so daß seine Kreisexzenterfläche aus der vom Spannbolzen entfernt gelegenen Durchlaßstellung heraus der Spannfläche am Spannbolzen bis zur Anlage daran angenähert wird. Infolg ihrer Exzentrizität gegenüber der Zylinderachse des Spannkörpers ragt dann der Exzenterkörper des Spannkörpers in die axiale Projektion des Spannbolzens und damit in die axiale Bewegungsbahn seiner Spannfläche hinein und hält dadurch den Spannbolzen in dem Durchgangsloch in axialer Richtung fest.

Da die Spannfläche am Spannbolzen an der Berührungsstelle mit der Kreisexzenterfläche des Spannkörpers einen verhältnismäßig kleinen Winkel mit der Längsachse des Spannbolzens einschließt, tritt eine verhältnismäßig große Kraftkomponente in radialer Richtung, bezogen auf den Spannbolzen, auf, die den Exzenterkörper des Spannkörpers vom Spannbolzen wegdrängt. Da der Exzenterkörper des Spannkörpers auch als Kurbelzapfen angesehen werden kann, übt diese radiale Kraftkomponente der Spannfläche des Spannbolzens auf den Exzenterkörper als Kurbelzapfen ein Drehmoment aus. Damit dieses Drehmoment nicht zu einem Zurückdrehen des Exzenterkörpers führt, muß er als Kurbelzapfen nahe seinem äußeren Totpunkt stehen, damit die Reibungskraft in Umfangsrichtung größer ist, als die Umfangskomponente am Kurbelzapfen. Das bedeutet, daß der Spannkörper zwischen seiner Durchlaßstellung für den Spannbolzen, in der er als Kurbelzapfen im inneren Totpunkt steht, bis zu seiner Klemmstellung, in der er als Kurbelzapfen nahe seinem äußeren Totpunkt steht, um einen verhältnismäßig großen Drehwinkel gedreht werden muß. Dieser liegt in der Größenordnung von 165°. Daneben darf der Kreisexzenter als Kurbelzapfen wiederum nicht zu nahe an den äußeren Totpunkt herankommen, weil sonst die Gefahr besteht, daß beim Auftreten einer Axialkraft am Spannbolzen der Exzenterkörper durch den Kurbelzapfen über den äußeren Totpunkt hinweggedreht wird und seine Klemmwirkung dann sofort aufhört.

Für den Klemm- oder Spannbereich des Exzenterkörpers gibt es demnach nur einen vehältmäßig kleinen Winkelbereich, in dem eine Klemmwirkung zuverlässig zu erwarten ist. Das aber verlangt eine besonders enge Tolerierung einer ganzen Reihe von Konstruktionsmaßen, wie etwa des Abstandes der Zylinderachse des Spannbolzens und des Spannkörpers, der Exzentrizität des Exzenterkörpers gegenüber der Zylinderachse des Spannkörpers, der axialen Lage der Spannfläche am Spannbolzen gegenüber derjenigen Ebene, in der die Zylinderachse des Spannkörpers und seines Exzenterkörpers gelegen sind, sowie der Durchmesser der Zylinderflächenpaarung zwischen dem Durchgangsloch und dem Spannbolzen und zwischen den Kreiszylinderflächen des Spannkörpers und den sie aufnehmenden Führungsflächen am Grundkörper. Dabei muß berücksichtigt werden, daß die Kreisexzenterfläche am Spannkörper in einem anderen Längenabschnitt gelegen ist, als seine beiden der Abstützung dienenden Kreiszylinderflächen. Bei einer hohen Querbelastung kommt die unvermeidliche elastische Verformung des Spannkörpers als weiterer Toleranzbereich zu den ürigen hinzu.

Schon verhältnismäßig geringe Abweichungen der Tolzeranzwerte innerhalb dieser Toleranzenkette, etwa bei der Fertigung oder später im Betrieb infolge von Verschleiß der gegeneinander bewegten Flächen, können dazu führen, daß die Klemmkraft dieser Kupplungsvorrichtung nachläßt und unter Umständen sogar unter den erforderlichen Mindestwert absinkt. Der große Drehwinkel für den Spannkörper ist bei häufiger vorkommenden Werkzeugwechseln sehr lästig. Als Folge von Ermüdungserscheinungen kann das dazu führen, daß der Spannkörper nicht immer bis zum erforderlichen Wert des Drehwinkels und der Spannkraft verdreht wird. Dann kann der Spannbolzen im Betrieb sich lockern und mit ihm auch der Schneideneinsatz, mit allen daraus entstehenden ungünstigen Folgen für das Bearbeitungsergebnis und/oder für das Werkzeug und die Werkzeugmaschine.

Der Erfindung liegt die Aufgabe zugrunde, ein teilbares Werkzeug für die spanabhebende Bearbeitung zu schaffen, bei dessen Kupplungsvorrichtung nur kurze Betätigungswege erforderlich sind und sich außerdem günstigere Klemmverhältnisse als bei dem bekannten Werkzeug ergeben.

Bei dieser Kupplungsvorrichtung wird zum Auswechseln eines Werkzeugkopfes der am Grundkörper quer zur Längsachse des Führungsbolzens des Werkzeugkopfes ausgerichtete Spannkörper in eine solche Drehstellung gebracht, in der seine Abflachung parallel zur Längsachse des Führungsbolzens ausgerichtet ist. Dann kann der von der Werkzeugschneide aus betrachtet jenseits des Spannkörpers befindliche Teil des Führungsbolzens am Spannkörper frei vorbeibewegt werden. Nach dem Einsetzen eines anderen Werkzeugkopfes wird dieser dadurch festgespannt, daß der Spannkörper so weit verdreht wird, daß die an die Abflachung anschließende Umfangsrampenfläche vor die zylindrische Spannfläche des Führungsbolzens des Werkzeugkopfes gelangt. Wegen der stetigen Zunahme des Achsabstandes dieser Rampenfläche von der Drehachse legt die Rampenfläche sich zunächst an der Spannfläche an und verschiebt diese bis zur gegenseitigen Anlage stirnseitiger Anlageflächen beider Werkzeugteile. Beim Weiterdrehen des Spannkörpers verspannt er den Führungsbolzen des Werkzeugkopfes in axialer Richtung. Gleichzeitig tritt auch eine gewisse radiale Verspannung des Führungsbolzens im Führungsloch ein, so daß das Radialspiel bis auf Null verringert wird. Der Verstellweg des Spannkörpers ist sehr klein, im allgemeinen kleiner als ein Viertelkreisbogen. Die Betätigung erfolgt sehr schnell. Die Umfangs-Rampenfläche ergibt dabei eine sehr hohe Kraftübersetzung von der Drehkraft am Spannkörper zur axialen Klemmkraft am Führungsbolzen. Bei dieser Ausbildung und Anordnung der Teile treffen nur zylindrische Flächen aufeinander, die den gleichen Halbmesser oder nur geringfügig unterschiedliche Halbmesser haben, so daß die Flächenpressungen an den Berührungsstellen verhältnismäßig gering bleiben. Sie sind auf jeden Fall wesentlich geringer als bei dem Zusammenwirken von Kreisexzenterflächen und ebenen Spannflächen wie bei der ersten Ausführungsform des bekannten teilbaren Werkzeuges und auch noch geringer als bei dem Zusammenwirken der Kreisexzenterflächen und der Kreiszylinderfläche bei der zweiten Ausführungsform des bekannten teilbaren Werkzeuges mit den deutlich unterschiedlichen Krümmungsradien.

Dadurch, daß am Spannkörper nur eine Rampenfläche vorhanden ist und daß außerhalb dieser Rampenfläche und außerhalb der Abflachung die verbleibende Umfangsfläche des Spannkörpers eine Kreiszylinderfläche ist, die auf die Kreiszylinderfläche des Führungsloches im Grundkörper abgestimmt ist, werden die zwischen der Spannfläche am Führungsbolzen und der Rampenfläche am Spannkörper auftretenden Spannkräfte über die diametral zur Rampenfläche gelegenen Kreiszylinderflächen unmittelbar auf den Grundkörper übertragen. Dadurch werden die an den Enden des Spannkörpers gelegenen Führungsflächen überhaupt nicht belastet und dementsprechend der Spannkörper auch nicht auf Biegung beansprucht. Dadurch wird jegliches Kantenreiten vermieden, das bei den auf Biegung beanspruchten Spannkörpern des bekannten teilbaren Werkzeuges infolge der elastischen Verformungen unvermeidlich auftritt.

Bei einer Ausgestaltung des Werkzeuges nach Anspruch 2 führt die Umfangs-Rampenfläche gegenüber der Spannfläche am Führungsbolzen eine Bewegung aus, deren parallel zur Längsachse des Führungsbolzens ausgerichtete Komponente gegensinnig zur Zugrichtung ausgerichtet ist. Sie ist somit zu einer von äußeren Kräften herrührenden Ausziehkraft am Führungsbolzen gleichsinnig ausgerichtet, wodurch eine solche Ausziehkraft infolge der herrschenden Reibungskräfte die Klemmbewegung des Spannkörpers unterstützt, also einen Selbstverstärkungseffekt bewirkt. Bei einer Ausgestaltung des Werkzeuges nach Anspruch 3 ist der Fertigungsaufwand für den Spannkörper ein Minimum, weil nur die beiden besonderen Flächenbereiche mit der Abflachung und mit der Umfangs-Rampenfläche zusätzlich bearbeitet werden müssen. Bei einer Ausgestaltung des Werkzeuges nach Anspruch 4 wird erreicht, daß die Abflachung am Spannkörper eine geringere Tiefe gegenüber der zylindrischen Ausgangsfläche haben kann. Dadurch steht ein größerer Umfangsbereich für die Umfangs-Rampenfläche und/oder für die verbleibende Zylinderfläche zur Verfügung. Außerdem wird die Berührungsstelle zwischen der Umfangs-Rampenfläche am Spannkörper und der Spannfläche am Führungsbolzen in einen Bereich verlegt, in dem ihre Mantellinien einer größere Länge haben, so daß die aufgrund elastischer Verformungen sich einstellende Berührungsfläche größer ist und dementsprechend die Flächenpressung geringer ist. Bei einer Ausgestaltung des Werkzeuges nach Anspruch 5 kann die Lösebewegung und die Spannbewegung auf sehr einfache Weise automatisiert werden. Bei einer Ausgestaltung des Werkzeuges nach Anspruch 6 muß bei einer Handbetätigung der Kupplungsvorrichtung die Bedienungsperson nicht visuell auf die richtige Einstellung des Spannkörpers achten, sondern sie kann die Drehbewegung bis zum Anliegen der Anschlagfläche am Anschlagkörper ausführen und dann einfach und schnell den gerade vorhandenen Werkzeugkopf herausziehen.

Eine Ausgestaltung des Werkzeuges nach Anspruch 7 gleicht die trotz hoher axialer Spannkraft in Umfangsrichtung, bezogen auf die Längsachse der Kupplungsvorrichtung, meist noch vorhandene Lose aus, die die Werkzeugschneide dadurch gefährdet, daß dann, wenn beim Beginn des Schneidvorganges die Werkzeugschneide am Werkstück angreift, die Schnittkraft sehr stark ansteigt und das dadurch auftretende Drehmoment bewirkt, daß der Werkzeugkopf gegenüber dem Grundkörper zunächst so weit verdreht wird, bis die unvermeidliche Lose zwischen den Anlageflächen der Drehsicherung überwunden ist und die Anlageflächen unmittelbar aneinander anliegen, und danach die Schnittkraft und entsprechend das Gegenmoment der Drehsicherung sich schlagartig auf einen sehr hohen Wert erhöht. Bei schlagempfindlichen Schneidenwerkstoffen, insbesondere bei den häufig verwendeten Wendeplatten aus keramischen Werkstoffen, bewirkt nämlich dieser Schlag sehr häufig ein Ausbrechen der Schneide, wodurch das Werkzeug unbrauchbar wird und der Werkzeugkopf gegen einen neuen ausgetauscht werden muß. Die Verminderung dieser Bruchgefahr wird dadurch erreicht, daß die Drehsicherung eine Positionierbüchse mit zwei diametral gelegenen Anlageflächen aufweist, von denen die entgegen der Kraftrichtung der Momentenkraft gelegene Anlagefläche gewissermaßen hohl liegt, weil dort die Wand der Positionierbüchse einen gewissen Abstand zu dem sie tragenden Werkzeugteil hat, und dadurch, daß die lichte Weite des Aufnahmeloches der Positionierbüchse gegenüber dem Positionierstift ein Untermaß hat, gibt beim Einführen des Positionierstiftes in die Positionierbüchse deren einer Wandbereich elastisch nach und drückt den Positionierstift mit einer entsprechenden Kraft gegen den unnachgiebigen Wandbereich. Dadurch wird von Anfang an die Lose zwischen diesem Wandbereich und dem Positionierstift beseitigt. Wenn dann die Schnittkraft einsetzt, wird die davon herrührende Momentenkraft vom Positionierstift unmittelbar auf den festen Wandbereich der Positionierbüchse und von dort auf den Grundkörper übertragen. Eine Setzbewegung innerhalb der Drehsicherung findet nicht mehr statt. Die Werkzeugschneide wird zumindest nicht mehr durch einen Setzbruch beschädigt oder zerstört. Diese Bruchsicherung arbeitet sehr zuverlässig, weil die Anlegebewegung bereits beim Einführen des Positionierstiftes in die Positionierbüchse stattfindet, noch ehe die Kupplungsvorrichtung den Werkzeugkopf mit dem Grundkörper verspannt. Bei einer Ausgestaltung des Werkzeuges nach Anspruch 8 lassen sich die Anlageflächen durch eine Bearbeitung mit rotierendem Werkstück und/oder mit rotierendem Werkzeug sehr einfach und billig und auch sehr genau herstellen. Auch die Zwischenflächen lassen sich dabei sehr einfach bearbeiten. Bei einer Ausgestaltung des Werkzeuges nach Anspruch 9, insbesondere bei der Ausbildung des Positionierstiftes und der Positionerbüchse als Drehteile, kann der erforderliche Zwischenraum beispielsweise dadurch auf einfache Weise hergestellt werden, daß der Positionierstift und/oder die Positionierbüchse nach einem entsprechenden Mittenversatz nochmals überdreht bzw. ausgedreht oder ausgebohrt oder überschliffen bzw. ausgeschliffen wird. Die dabei entstehende mondsichelförmige Querschnittsform des Zwischenraumes entspricht weitgehend dem elastischen Verformungsweg des nachgiebigen Wandbereiches der Positionierbüchse.

Bei einer Ausgestaltung des Werkzeuges nach Anspruch 10 erhält die Positionierbüchse neben dem Längenabschnitt mit dem nachgiebigen Wandbereich noch einen Längenabschnitt mit fester Anlage an dem betreffenden Werkzeugteil, der ihr einen sicheren Sitz gewährt, ohne daß dafür die Ausdehnung des nachgiebigen Wandbereiches in Umfangsrichtung beschränkt werden muß. Durch den Querschlitz werden die beiden Längenabschnitte so weit voneinander unabhängig, daß sie ihre unterschiedlichen Aufgaben ohne wechselseitige Beeinflussung voll erfüllen können. Durch eine Ausgestaltung des Werkzeuges nach Anspruch 11 kann man die Fedrigkeit des nachgiebigen Wandbereiches in weiten Grenzen den Erfordernissen leicht anpassen.

Durch eine Ausgestaltung des Werkzeuges nach Anspruch 12 kann auch bei wechselnder Lage der Werkzeugschneide am Werkzeugkopf die Drehsicherung stets seitenrichtig eingesetzt werden.

Im folgenden wird die Erfindung anhand mehrerer in der Zeichnung dargestellter Ausführungsbeispiele näher erläutert. Es zeigen:

Fig. 1   eine teilweise geschnitten dargestellte Seitenansicht eines ersten Ausführungsbeispieles des Werkzeuges gemäß der Erfindung in der Spannstellung seiner Teile;

Fig. 2   eine Draufsicht des Werkzeuges nach Fig. 1;

Fig. 3   eine teilweise geschnitten dargestellte Seitenansicht des Werkzeuges nach Fig. 1 in der Lösestellung seiner Teile;

Fig. 4   eine teilweise geschnitten dargestellte Stirnansicht eines Teils des Werkzeuges nach Fig. 1 ;

Fig. 5   einen Querschnitt des Werkzeuges nach Fig. 1 nach der Schnittverlaufslinie V - V in Fig. 1 ;

Fig. 6   eine ausschnittweise und teilweise geschnitten dargestellte Stirnansicht eines Teils eines zweiten Ausführungsbeispieles des Werkzeuges gemäß der Erfindung;

Fig. 7   eine Draufsicht des Werkzeuges nach Fig. 6.

Fig. 8   eine teilweise geschnitten dargestellte Untersicht eines dritten Ausführungsbeispieles des Werkzeuges gemäß der Erfindung mit Werkzeugkopf und Grundkörper in teilweise voneinander gelöstem Zustand;

Fig. 9   eine teilweise geschnitten dargestellte Seitenansicht des Werkzeuges nach Fig. 8;

Fig. 10   eine Rückansicht des Werkzeugkopfes von Fig. 8;

Fig. 11   eine Stirnansicht des Grundkörpers von Fig. 8;

Fig. 12   eine Stirnansicht eines Positionierstiftes des Werkzeugkopfes von Fig. 8;

Fig. 13   eine ausschnittweise dargestellte Seitenansicht des Positionierstiftes nach Fig. 12;

Fig. 14   einen ausschnittweise dargestellten Längsschnitt des Grundkörpers von Fig. 8 mit einer Positionierbüchse;

Fig. 15   einen ausschnittweise dargestellten Querschnitt des Grundkörpers von Fig. 8 mit ungeschnittener Positionierbüchse.

Bei dem ersten Ausführungsbeispiel weist das teilbare Werkzeug 10 einen Grundkörper 11 und einen Werkzeugkopf 12 auf, die voneinander trennbar sind und mittels einer Kupplungsvorrichtung 13 miteinander verbunden werden können.

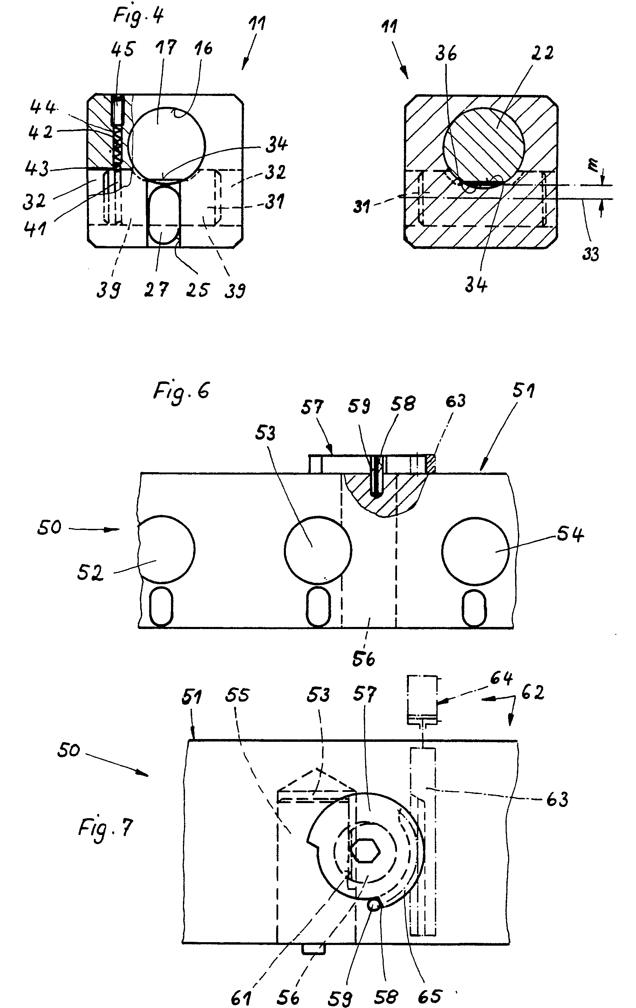

Der Grundkörper 11 ist als Stange mit quadratischer Querschnittsform ausgebildet (Fig. 4 und 5), bei der die Ecken abgeschrägt sind. Dieser Grundkörper 11 dient der Befestigung des gesamten Werkzeuges 10 an einer Werkzeugmaschine, an der er in nicht näher dargestellter weise eingespannt wird. Je nach den Erfordernissen des Einzelfalles kann der Grundkörper auch eine andere Form und/oder zusätzliche Ausgestaltungen aufweisen.

Der Werkzeugkopf 12 trägt die Werkzeugschneide 14, die als Wendeplatte ausgebildet ist. Sie ist in eine auf sie abgestimmte Ausnehmung des Werkzeugkopfes 12 eingesetzt und mittels einer dafür üblichen Befestigungsschraube 15 mit dem Werkzeugkopf 12 verbunden. Der Werkzeugkopf 12 ist als Drehmeißel oder Bohrmeißel dargestellt (Fig. 2). Dafür kommt aber auch jede andere Gestalt in Betracht.

Die Kupplungsvorrichtung 13 weist Führungsflächen und Spannflächen auf, die teils am Grundkörper 11 und teils am Werkzeugkopf 12 angeordnet sind und die der gegenseitigen Führung der beiden Werkzeugteile und ihrer gegenseitigen form- und/oder kraftschlüssigen Koppelung dienen.

Die Führungsfläche 16 am Grundkörper 11 wird durch die Umfangsfläche eines kreiszylindrischen Führungsloches 17 gebildet, dessen Längsachse oder Zylinderachse 18 parallel zur Längsachse 19 des Grundkörpers 11 ausgerichtet ist, die aufgrund der quadratischen Querschnittsform des Grundkörpers 11 sowohl in horizontaler wie auch in vertikaler Richtung die Projektion der betreffenden Symmetriebene darstellt. In der Vertikalprojektion (Fig. 2) fluchtet die Zylinderachse 18 des Führungsloches 17 mit der Längsachse 19 des Grundkörpers 11. In der Horizontalprojektion (Fig. 1) liegt die Zylinderachse 18 des Führungsloches 17 um ein gewisses Maß oberhalb der Längsachse 19 des Grundkörpers 11. Die Führungsfläche 21 am Werkzeugkopf 12 wird durch die Umfangsfläche eines im wesentlichen kreiszylindrischen Führungsbolzens 22 gebildet, der mit dem Hauptteil des Werkzeugkopfes 12 einstückig ausgebildet ist. Die Zylinderachse 18 bildet zugleich auch die Längsachce des Führungsbolzens 21. Der Führungsbolzen 21 ist etwas kürzer als das Führungsloch 17. An den einander zugekehrten Stirnseiten außerhalb der beiden kreiszylindrischen Führungsflächen 16 und 21 sind sowohl der Grundkörper 11 wie auch der Werkzeugkopf 12 mit je einer ebenen Anlagefläche 23 bzw. 24 versehen.

Im Bereich der beiden Anlageflächen 23 und 24 ist unterhalb des Führungsloches 17 und des Führungsbolzens 21 eine Nut- und Federverbindung vorhanden. Diese weist in der mit der Zylinderachse 18 des Führungsbolzens 22 und mit der Längsachse 19 des Grundkörpers 11 fluchtenden Vertikalebene eine Nut 25 am Grundkörper 11 und eine Nut 26 am Werkzeugkopf 12 auf, die hinsichtlich ihrer Abmessungen, insbesondere hinsichtlich ihrer Breite und Länge, aufeinander abgestimmt sind. Am Grundkörper 11 ist in der Nut 25 eine Feder 27 eingesetzt (Fig. 3 und 4). Diese Nut- und Federverbindung dient als Drehsicherung des Werkzeugkopfes 12 gegenüber dem Grundkörper 11.

Beim Werkzeugkopf 12 wird die Spannfläche 28 durch einen Abschnitt einer Kreiszylinderfläche gebildet, deren Zylinderachse 29 die Zylinderachse 18 des Führungsbolzens 22 rechtwinklig kreuzt (Fig. 1 und 2). Mit dieser Spannfläche 28 des Werkzeugkopfes 12 wirkt ein Spannkörper 31 zusammen, der am Grundkörper 11 in einem kreiszylindrischen Führungsloch 32 angeordnet ist, dessen Zylinderachse 33 die Zylinderachse 18 des Führungsbolzens 22 rechtwinklig kreuzt. Dabei hat die Zylinderachse 33 des Führungsloches 32 in radialer Richtung von der Längsachse 18 des Führungsbolzens 22 einen Abstand, der gleich oder kleiner als der Abstand der Zylinderachse 29 der Spannfläche 28 von der Längsachse 18 des Führungsbolzens 22 ist. In der Spannstellung der beiden Werkzeugteile (Fig. 1 und 2) ist die Zylinderachse 33 des Führungsloches 32 gegenüber der Zylinderachse 29 der Spannfläche 28 um ein gewisses Maß m in Spannrichtung versetzt.

Der Spannkörper 31 hat eine kreiszylindrische Grundform. In einem mittleren Längenabschnitt, der mindestens so lang wie die längste Mantellinie der Spannfläche 28 am Führungsbolzen 22 ist, weist der Spannkörper 31 eine Abflachung 34 auf (Fig. 1 und 3). Diese ist parallel zur Zylinderachse 33 des Spannkörpers 31 ausgerichtet. Ihr Abstand n (Fig. 5) von der Zylinderachse 33 des Spannkörpers 31 ist höchstens gleich demjenigen Abstand, den die am Führungsbolzen 22 in Zugrichtung jenseits des Spannkörpers 31 gelegene und in radialer Richtung dem Spannkörper am nächsten gelegene Mantellinie 35 der Spannfläche 28 des Führungsbolzens 22 von der Zylinderachse 33 des Spannkörpers 31 hat. Diese Mantellinie 35 befindet sich an derjenigen Stelle (Fig. 1 und 3), an der am Führungsbolzen 22 die kreiszylindrische Spannfläche 28 und eine Abflachung 36 einander durchdringen. Diese Abflachung 36 ist am Führungsbolzen 22 auf der gleichen Seite wie die Spannfläche 28 angeordnnet. Sie erstreckt sich vom freien Ende des Führungsbolzens 22 aus in Richtung auf den Werkzeugkopf 11 hin bis wenigstens zum Längenabschnitt mit der Spannfläche 28 hin oder geringfügig darüber hinaus. Die Abflachung 36 ist parallel zur Zylinderachse 18 des Führungsbolzens 22 und zugleich parallel zur Zylinderachse 29 der Spannfläche 28 ausgerichtet. Damit ist sie auch zugleich parallel zur Zylinderachse 33 des Spannkörpers 31 ausgerichtet und in einer bestimmten Drehstellung des Spannkörpers 31 parallel zu dessen Abflachung 34 ausgerichtet (Fig. 3). Infolge dieser Abflachung 36 erhält die Mantellinie 35 eine gewisse endliche Länge in der Querrichtung (Fig. 5), die sonst auf die nur näherungsweise gerade Scheitellinie der räumlich gekrümmten Durchdringungslinie zwischen der Spannfläche 28 und der Umfangsfläche 21 des Führungsbolzens 22 beschränkt wäre.

An dem in der Zugrichtung der Kupplungsvorrichtung 13, d. h. in der vom Werkzeugkopf 12 abgekehrten Richtung, gelegenen Rand 37 der Abflachung 34 schließt eine zylindrische Rampenfläche 38 an, deren Mantellinien parallel zur Zylinderachse 33 des Spannkörpers 31 ausgerichtet sind. Der Abstand der Rampenfläche 38 von der Zylinderachse 33 hat am Rand 37 der Abflachung 34 einen Kleinstwert, der in Umfangsrichtung vom Rand 37 weg bis auf einen Größtwert stetig zunimmt, der gleich dem Halbmesser der zylindrischen Umfangsfläche des Spannkörpers 31 außerhalb der Rampenfläche 38 und außerhalb der Abflachung 34 ist. Der Kleinstwert des Achsabstandes der Rampenfläche 38 ist höchstens gleich dem kleinsten Abstand, der in der Spannstellung der beiden Werkzeugteile (Fig. 1) zwischen der Zylinderachse 33 des Spannkörpers 31 und der ihr in Zugrichtung am nächsten gelegenen Stelle des Führungsbolzens 22, nämlich der Mantellinie 35 der Spannfläche 28, ist. Da der Größtwert des Achsabstandes der Rampenfläche 38 nicht über den Halbmesser der kreiszylindrischen Umfangsfläche des Spannkörpers 31 hinausgeht, ist die Lage der Mantellinie 35 am Führungsbolzen 22 so zu wählen, daß in der Koppelstellung der beiden Werkzeugteile der Abstand der Mantellinie 35 von der Zylinderachse 33 des Spannkörpers 31 kleiner als der Halbmesser der zylindrischen Umfangsfläche de Spannkörpers 31 ist. Bei der Einhaltung dieser Bedingungen bildet die Rampenfläche 38 die Spannfläche des Spannkörpers 31 und damit zugleich die Spannfläche des Grundkörpers 11.

Die Umfangsfläche der Längenabschnitte des Spannkörpers 31, die beiderseits außerhalb der Abflachung 34 und der Rampenfläche 38 gelegen sind, bilden kreiszylindrische Führungsflächen 39 für den Spannkörper 31.

Das gleiche gilt für den im Längenabschnitt mit der Abflachung 34 im Umfangsbereich außerhalb der Abflachung 34 und der Rampenfläche 38 gelegenen kreiszylindrischen Flächenbereich. Mit diesen Führungsflächen 39 wird der Spannkörper 31 an der Umfangsfläche des Führungsloches 32 im Grundkörper 11 geführt und gelagert. Der der Mantellinie 35 und dem anschließenden Flächenbereich der Spannfläche 28 diametral gegenüberliegende Flächenbereich des Führungsloches 32 nimmt die Spannkräfte auf, die zwischen der Rampenfläche 38 als Spannfläche des Spannkörpers 31 und der Spannfläche 28 des Führungsbolzens 22 in der Koppelstellung der beiden Werkzeugteile wirken.

Wie aus Fig. 4 ersichtlich ist, ist am Spannkörper 31 in einem zylindrischem Endbereich eine Umfangsnut 41 vorhanden, deren Querschnittsfläche zwischen einem Halbkreis und einem Kreisabschnitt gelegen ist. In der Ebene der Umfangsnut 41 ist am Grundkörper 11 eine radial zum Führungsloch 32 ausgerichtete Bohrung 42 vorhanden, die nur teilweise bis zum Führungsloch 32 geführt ist, so daß an der Übergangsstelle zwischen der Bohrung 42 und dem Führungsloch 32 ein Kragen stehen bleibt. Dieser Kragen hat eine geringere lichte Weite als der Außendurchmesser eines Rastkörpers 43 mit balliger Stirnfläche, z. B, einer Kugel, der in die Bohrung 42 eingesetzt ist. Er wird mittels einer Druckfeder 44 gegen den Kragen der Bohrung 42 gedrückt. Die Druckfeder 44 wird mittels eines Gewindestiftes 45 gespannt, der in ein Muttergewinde am Anfang der Bohrung 42 eingeschraubt ist. Mittels des federbelasteten Rastkörpers 43, der teilweise in die Umfangsnut 41 am Spannkörper 31 eingreift, wird der Spannkörper 31 im Führungsloch 32 in axialer Richtung geführt. Zum Einführen oder Entfernen des Spannkörpers 31 muß lediglich eine ausreichend große Axialkraft auf ihn ausgeübt werden, damit er den Rastkörper 43 in die Bohrung 42 zurückdrängt und dann daran vorbeigleiten kann.

Zum Einleiten einer Lösebewegung oder einer Spannbewegung auf den Spannkörper 31 weist er an einer oder an beiden Stirnseiten einen Innensechskant 45 auf, wie es aus Fig. 1 ersichtlich ist.

Zum Auswechseln des Werkzeugkopfes 12 wird der Spannkörper 31 in die aus Fig. 3 ersichtliche Drehstellung gedreht, in der seine Abflachung 34 parallel zur Zylinderachse 18 des Führungsbolzens 22 ausgerichtet ist. Damit ist die Abflachung 34 zugleich parallel zur Abflachung 36 am Führungsbolzen 22 ausgerichtet, wobei beide Abflachungen an dem betreffenden Teil so angeordnet sind, daß ein gewisses Spiel zwischen ihnen vorhanden ist, wie es in Fig. 3 angedeutet ist. Der Werkzeugkopf, 12 kann in dieser Lösestellung des Spannkörpers 31 vom Grundkörper 1 abgezogen werden. Nach dem Einführen des Führungskörpers 22 des nächsten Werkzeugkopfes 12 bis zur gegenseitigen Anlage der Anlageflächen 23 und 24 und bis zum Eingreifen der Nut- und Federverbindung 25...27 befindet sich die Spannflächen 28 zumindest annähernd in dem Längenabschnitt des Führungsloches 17, in dem der Spannkörper 31 angeordnen ist. Durch Drehen des Spannkörpers 31 im Gegen uhrzeigersinne bewegt sich seine Rampenfläche 38 in die zylindrische Aussparung mit der Spannfläche 28 hinein, und zwar so lange, bis die Rampenfläche 38 an der Mantellinie 35 und an dem anschließenden Flächenabschnitt der Spannflächen 28 anliegt. Die Größe der axialen Spannkraft der Kupplungsvorrichtung 13 wird über das Drehmoment am Spannkörper 31 auf den gewüschten Wert eingestellt.

Bei dem aus Fig. 6 und 7 ersichtlichen Ausführungsbeispiel des Werkzeuges 50 hat der Grundkörper 51 eine größere Ausdehnung in der Querrichtung, so daß dort mehrere Werkzeugköpfe nebeneinander angeordnet werden können. Dazu sind am Grundkörper mehrere Führungslöcher 52...54 vorhanden, in die je ein Führungsbolzen 55 eines Werkzeugkopfes eingeführt werden kann, der dann darin festgeklemmt wird.

Bei diesem Ausführungsbeispiel sind die Spannkörper 56 lotrecht ausgerichtet. An ihrem einen Ende sind sie mit einem Bund 57 versehen, an dem ein Teil seines Umfangsbereiches in der Weise entfernt ist, daß wenigstens eine Anschlagfläche 58 geschaffen ist, deren Flächennormale zumindest eine Umfangskomponente hat, oder, noch besser, vollständig tangential ausgerichtet ist. In der Bewegungsbahn dieser Anschlagfläche 58 ist am Grundkörper 51 an derjenigen Stelle ein Anschlagkörper 59 vorhanden, die derjenigen Drehstellung des Spannkörpers 56 entspricht, in der seine Anflachung 61 parallel zur Längsachse des Führungsbolzens 55 ausgerichtet ist. Dadurch wird vor allem bei Handbetätigung gewährleistet, daß ohne besondere Aufmerksamkeit, beispielsweise ohne visuelle Überwachung der Übereinstimmung zweier Markierungen, der Spannkörper die Drehstellung einnimmt, in der ein Werkzeugkopf ausgewechselt werden kann.

In Fig. 7 ist als mögliche Abwandlung ein mechanischer Verstellantrieb 62 angedeutet. Dieser weist eine geführte Zahnstange 63 auf, die am Grundkörper 51 in ihrer Längsrichtung verschiebbar ist und die mit einem pneumatischen oder hydraulischen Kolbenantrieb 64 gekoppelt ist. Sie kämmt mit einem verzahnten Segment 65 des Bundes 57. Anstelle dieses verzahnten Segmentes 65 kann auch ein gesondertes Zahnrad oder ein gesondertes verzahntes Segment mit dem Drehkörper 56 drehfest verbunden sein. In einer weiteren Abwandlung kann der Spannkörper 56 auch selbst mit einer teilweisen oder vollständig umlaufenden Umfangsverzahnung versehen sein. Anstelle der Zahnstange 63 mit dem Kolbenantrieb 64 kann auch ein zweites Zahnrad oder ein zweites verzahntes Segment vorhanden sein, das mit dem verzahnten Teil des Spannkörpers 56 kämmt und das seinerseits mit einem Drehantrieb gekoppelt ist oder gekoppelt werden kann. Anstelle je eines einzelnen Verstellantriebes 62 für den einzelnen Spannkörper 56 ist je nach den Erfordernissen des Einzelfalles auch ein Verstellantrieb möglich, der zwei oder mehr der Spannkörper gleichzeitig, und zwar entweder gleichsinnig oder gegensinnig antreibt, so daß entweder mehrere Werkzeugköpfe gleichzeitig gespannt und gelöst werden können, oder daß dies abwechselnd geschieht.

Im folgenden wird anhand Fig. 8 bis 15 ein drittes Ausführungsbeispiel erläutert, das gegenüber dem ersten Ausführungsbeispiel nach Fig. 1 bis 5 hinsichtlich der Drehsicherung abgewandelt ist. Wenn die Werkzeugschneide 14 aus einem keramischen Schneidenwerkstoff hergestellt ist, reicht die durch die Nut-und-Federverbindung 25 bis 27 gebildete Drehsicherung häufig nicht aus, die Werkzeugschneide 14 vor Bruch zu bewahren. Das rührt daher, daß die Werkzeugschneide in den allermeisten Fällen außerhalb der Mittelebene der Kupplungsvorrichtung gelegen ist. Dann tritt beim Arbeiten des Werkzeuges ein Drehmoment auf, das den Werzeugkopf gegenüber dem Grundkörper zu verdrehen versucht. Wenn beim Beginn des Schneidvorganges die Werkzeugschneide am Werkstück angreift, steigt die Schnittkraft sehr stark an. Das dadurch auftretende Drehmoment bewirkt, daß trotz der in axialer Richtung wirkenden Spannkräfte und der von ihnen an den stirnseitigen Anlageflächen ausgelösten Reibungskräfte der Werkzeugkopf gegenüber dem Grundkörper zunächst so weit verdreht wird, bis die unvermeidliche Lose zwischen den Anlageflächen der Drehsicherung überwunden ist und die Anlageflächen unmittelbar aneinander anliegen. Danach erhöht sich die Schnittkraft und entsprechend das Gegenmoment der Drehsicherung schlagartig auf einen sehr hohen Wert. Bei schlagempfindlichen Schneidenwerkstoffen, insbesondere bei den häufig verwendeten Wendeplatten aus keramischen Werkstoffen, bewirkt dieser Schlag sehr häufig ein Ausbrechen der Schneide. Das Werkzeug ist dann unbrauchbar und der Werkzeugkopf muß gegen einen neuen ausgetauscht werden. Das wird mit der beim dritten Ausführungsbeispiel verwendeten Drehsicherung vermieden.

Bei diesem Ausführungsbeispiel sind die Bezugszahlen der einzelnen Teile gegenüber denjenigen der entsprechenden Teile des Ausführungsbeispieles nach Fig. 1 bis 5 um 100 erhöht. Soweit im folgenden einzelne Teile oder Baugruppen nicht gesondert beschrieben werden, ist davon auszugehen, daß sie gleich oder zumindest ähnlich den entsprechenden Teilen oder Baugruppen des ersten Ausführungsbeispieles ausgebildet sind und wirken.

Das teilbare Werkzeug 110 weist einen Grundkörper 111 und einen Werkzeugkopf 112 auf, die voneinander trennbar sind und mittels einer Kupplungsvorrichtung 113 miteinander verbunden werden können.

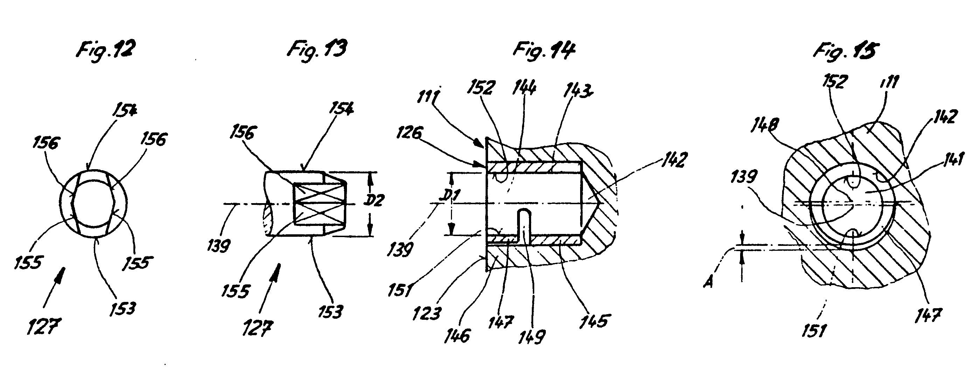

Im Bereich der einander zugekehrten Stirnseiten des Grundkörpers 111 und des Werkzeugkopfes 112 mit den Anlageflächen 123 bzw. 124 ist eine Drehsicherung 125 angeordnet. Sie weist eine am Grundkörper 111 angeordnete Positionierbüchse 126 und einen am Werkzeugkopf 112 angeordneten Positionierstift 127 auf. Sobald bei vollständig eingesetztem Werkzeugkopf 112 die beiden Teile 126 und 127 der Drehsicherung 125 ineinandergreifen, wirken sie sowohl als Positionierelemente zwischen den beiden Werkzeugteilen 111 und 112 wie auch als Sicherungselemente insbesondere für die Werkzeugschneide 114, wie anhand Fig. 12...15 im einzelnen noch dargelegt werden wird.

Wie aus Fig. 8 und 9 ersichtlich ist, sind die Positionierbüchse 126 und der Positionierstift 127 in der Stirnseite des ihnen zugeordneten Werkzeugteils 111 bzw. 112 so angeordnet und ausgerichtet, daß sie miteinander fluchten und ihre Achsen eine gemeinsame Fluchtlinie 139 haben. Diese ist parallel zur Zylinderachse 118 der Führungsflächen 116 und 121 am Grundkörper 111 bzw. am Werkzeugkopf 112 ausgerichtet.

Die Positionierbüchse 126 weist ein kreiszylindrisches Aufnahmeloch 141 auf, dessen Zylinderachse mit der gemeinsamen Fluchtlinie 139 fluchtet. Die Positionierbüchse 126 ihrerseits sitzt in einem kreiszylindrischen Sackloch 142 in der Stirnseite des Grundkörpers 111. Die Positionierbüchse 126 hat zwei Längenabschnitte 143 und 144. Der von der Anlagefläce 123 abgekehrte Längenabschnitt 143 hat eine kreiszylindrische Außenseite. Sein Außendurchmesser ist auf den Innendurchmesser des Sackloches 142 so abgestimmt, daß sich ein geringes Übermaß ergibt und dadurch bei diesem Längenabschnitt zwischen seiner Wand 145 und der ihn umgebenden Wand 146 des Grundkörpers 111 nicht nur ein Abstand nicht vorhanden ist, sondern zwischen diesen beiden Teilen zumindest ein Treibsitz oder ein leichter Preßsitz gegeben ist. Dadurch wird die Positionierbüchse 126 sowohl in Längsrichtung wie auch in Umfangsrichtung in dem Sackloch 142 sicher festgehalten. Bei dem Längenabschnitt 144, der den Positionierstift 127 aufnimmt, hat in einem gewissen Umfangsbereich, und zwar in dem in Fig. 14 und 15 unten gelegenen Umfangsbereich, die Außenseite der Wand 147 einen gewissen Abstand A von der sie umgebenden Wand 146 des Grundkörpers 111. Dieser Abstand, der in dem in Fig. 15 unten gelegenen Bereich am größten ist und zur Mittelebene der Positionierbüchse 126 hin bis auf null abnimmt, kommt dadurch zustande, daß dieser unten gelegene Flächenabschnitt der Umfangsfläche der Positionierbüchse 126 durch eine Kreiszylinderfläche gebildet wird, deren Zylinderachse 148 gegenüber der gemeinsamen Fluchtlinie 139 einen gewissen Mittenversatz hat (Fig. 15).

Die beiden Längenabschnitte 143 und 144 der Positionierbüchse 126 sind durch einen Querschlitz 149 teilweise voneinander getrennt. der Querschlitz 149 ist in demjenigen Umfangsbereich angebracht, in dem die Wand 147 von der sie umgebenden Wand 146 einen gewissen Abstand hat.

Der Querschlitz ist dabei symmetrisch zu der Stelle ausgerichtet, bei der dieser Abstand den Größtwert A hat. Der Querschlitz erstreckt sich zumindest annähernd bis zur Mittelebene der Positionierbüchse 126 in diese hinein und geht von der Außenseite bis zur Innenseite dieses Wandabschnittes durch. Infolge dieses Querschlitzes 149 werden die elastischen Radialbewegungen der Wand 147 nicht von der starren Wand 145 behindert.

In dem Längenabschnitt 144 der Positionierbüchse 126 bilden die beiden Flächenabschnitte der Umfangsfläche des Aufnahmeloches 141, die in der Durchmesserrichtung mit dem größten Abstand A zwischen der Wand 147 und der Wand 146 gelegen sind, je eine Anlagefläche 151 und 152 für den Positionierstift 127. Sie haben einen lichten Abstand, der durch den Nenndurchmesser des Aufnahmeloches 141 im Bereich des Längenabschnittes 144 vorgegeben ist. Am Positionierstift 127 sind in der gleichen Durchmesserrichtung ebenfalls zwei Anlageflächen 153 und 154 vorhanden, die durch entsprechende Umfangsabschnitt einer umlaufenden Kreiszylinderfläche gebildet werden. In den Umfangsbereichen zwischen den beiden Anlageflächen 153 und 154 haben die übrigen Außenflächen des Positionierstiftes 127 einen geringeren Achsabstand als die Anlageflächen 153 und 154. Sie werden auf jeder Seite durch je zwei dachförmig verlaufende Abflachungen 155 und 156 gebildet. Die Längserstreckung der Anlageflächen 153 und 154 ist so bemessen, daß diese Anlageflächen 153 und 154 über die stirnseitige Anlagefläche 124 des Werzeugkopfes 112 nur um ein Maß hinausragen, das nicht größer als die Längserstreckung des Längenabschnittes 144 der Positionierbüchse 126 ist, wobei allenfalls noch die Breite des Querschlitzes 149 hinzugerechnet werden darf. Die Längserstreckung der Abflachungen 155 und 156 ist mindest gleich, besser etwas größer als die Eintauchtiefe der Anlageflächen 153 und 154. Der Rücksprung der Abflachungen 155 und 156 gegenüber der Kreiszylinderform ermöglicht es, daß die Wand 147 beim Eintreten des Positionierstiftes 127 sich in Richtung der Anlagefläche 151 radial ausdehnt und zum Ausgleich dafür in den Nachbarbereichen radial einwärts verformt.

Der lichte Abstand D1 der Anlageflächen 151 und 152 der Positionierbüchse 126 (Fig. 14) ist um ein gewisses Maß kleiner als der Außenabstand D2 der beiden Anlageflächen 153 und 154 des Positionierstiftes 127. Die beiden Maße D1 und D2 sind im Hinblick auf die unvermeidlichen Fertigungstoleranzen so zu wählen, daß auch unter Berücksichtigung der ungünstigsten Werte der beiden Toleranzfelder zwischen dem lichten Abstand D1 und .dem Außenabstand D2 ein geringes Untermaß bleibt. Dieses ist erforderlich, damit beim Einführen des Positionierstiftes 127 in das Aufnahmeloch 141 der Positionierbüchse 126 der in radialer Richtung nachgiebige Wandteil 147 elastisch nach außen ausweichen muß, so daß durch die dadurch entstehende elastische Gegenkraft der Positionierstift 127 gegen die gegenüberliegende Anlagefläche 152 gedrückt wird und daran spielfrei anliegt. Da im Bereich der Anlagefläche 152 die Wand der Positionierbüchse 126 ihrerseits spielfrei an der Wand 146 des Grundkörpers 111 anliegt, kann man davon ausgehen, daß der Positionierstift 127 spielfrei vom Grundkörper 111 abgestützt wird.

Damit diese spielfreie Abstützung des von der Werkzeugschneide herrührenden Drehmomentes der Absicherung der Werkzeugschneide voll zugute kommt, muß derjenige Umfangsbereich, bei dem der Abstand zwischen der Wand 147 der Positionierbüchse 126 und der Wand 146 des Grundkörpers 111 vorhanden ist, gerade entgegengesetzt zu der Kraftrichtung der Momentenkraft gerichtet sein. In der in Fig. 10 dargestellten Stirnansicht tritt an der Werkzeugschneide 114 eine abwärts gerichtete Kraftkomponente 157 auf, die den Werkzeugkopf 112 um die Zylinderachse 118 des Führungsbolzens 122 im Gegenuhrzeigersinne zu drehen versucht. Die beiden Anlageflächen 153 und 154 des unterhalb der Zylinderachse gelegenen Positionierstiftes 127 müssen deshalb in waagerechter Richtung ausgerichtet sein. Die am Positionierstift 127 auftretende Momentenkraft 158 wirkt in waagerechter Richtung nach rechts. Bei der in Fig. 11 in umgekehrter Blickrichtung dargestellten Positionierbüchse 126 muß diese Momentenkraft 158 waagrecht im Uhrzeigersinne aufgefangen weden. Daher ist die nachgiebige Wand 147 in Fig. 11 rechts anzuordnen. In Fig. 12...15 erscheint diese Anordnung dann seitenrichtig, wenn die Teile bei hochkant gestelltem Zeichnungsblatt betrachtet werden, bei dem Fig. 12 oben und Fig. 15 unten steht.

Bei einer umgekehrten Anordnung der Werkzeugschneide am Werkzeugkopf gelten die vorstehenden Überlegungen selbstverständlich mit umgekehrten Richtungsangaben. Bei Werkzeugen, bei denen die Lage der Werkzeugschneide am Werkzeugkopf von einer Seite zur anderen wechseln kann, muß die Positionierbüchse im Grundkörper jeweils um 180° gedreht werden. Wenn ein solcher Wechsel sehr häufig vorkommt, kann es zweckmäßiger sein, den Positionierstift am Grundköper und die Positionierbüchse am Werkzeugkopf anzuordnen. Dann kann die Positionierbüchse stets seitenrichtig zur Lage der Werkzeugschneide eingesetzt werden. Der Positionierstift ist ohnehin seitenneutral.

**Patentansprüche**

1. Teilbares Werkzeug (10) mit den Merkmalen:
- es ist ein der Befestigung an einer Werkzeugmaschine dienender Grundkörper (11) und ein die Werkzeugschneide (14) tragender Werkzeugkopf (12) vorhanden,
- der Grundkörper (11) und der Werkzeugkopf (12) sind voneinander trennbar und mittels einer Kupplungsvorrichtung (13) miteinander verbindbar,
- die Kupplungsvorrichtung (13) weist Führungsflächen und Spannflächen an den relativ zueinander bewegbaren Teilen des Grundkörpers (11) und des Werkzeugkopfes (12) auf,

- die Führungsfläche (16) am Grundkörper (11) ist als Umfangsfläche eines Führungsloches (17) mit geraden parallelen Mantellinien ausgebildet,
- die Führungsfläche (21) am Werkzeugkopf (12) ist als darauf abgestimmte Umfangsfläche eines Führungsbolzens (22) ausgebildet,
- am Grundkörper (11) ist für die drehbare Lagerung eines Spannkörpers (31) ein kreiszylindrisches Führungsloch (32) vorhanden, dessen Zylinderachse (33)
- - zur Längsachse (18) des Führungsbolzens (22) rechtwinklig ausgerichtet ist,
- - in radialer Richtung von der Längsachse (18) des Führungsbolzens (22) einen Abstand hat, der gleich oder kleiner als der Abstand der Zylinderachse (29) der Spannfläche (28) von der Längsachse (18) des Führungsbolzens (22) ist und
- - in axialer Richtung gegenüber der Zylinderachse (29) der Spannfläche (28) am Führungsbolzen (22) um ein gewisses Maß (m) in Spannrichtung versetzt ist,
- am Führungsbolzen (22) des Werkzeugkopfes (12) ist die Spannfläche (28) als Abschnitt einer Kreiszylinderfläche ausgebildet,
- - deren Zylinderachse (29) zur Längsachse (18) des Führungsbolzens (22) rechtwinklig ausgerichtet ist,
- am Grundkörper (11) ist die Spannfläche (38) als Teil der Außenfläche des Spannkörpers (31) ausgebildet,
- der Spannkörper (31) weist in einem Längenabschnitt, der mindestens so lang wie die längste Mantellinie der Spannfläche (28) am Führungsbolzen (22) ist, eine Abflachung (34) auf,
- - die parallel zur Zylinderachse (33) des Spannkörpers (31) ausgerichtet ist und
- - deren Abstand (n) von der Zylinderachse (33) des Spannkörpers (31) höchstens gleich demjenigen Abstand ist, den die am Führungsbolzen (22) in Zugrichtung jenseits des Spannkörpers (31) gelegene und in radialer Richtung dem Spannkörper am nächsten gelegene Mantellinie (35) des Führungsbolzens (22) von der Zylinderachse (33) des Spannkörpers (31) hat,
- am spannkörper (31) wird die Spannfläche durch eine am einen Rand (37) der Abflachung (34) anschließende Umfangs-Rampenfläche (38) gebildet,
- - deren Abstand von der Zylinderachse (33) des Spannkörpers (31) am Rand (37) der Abflachung (34) einen Kleinstwert hat,
- - - wobei dieser Kleinstwert höchstens gleich dem kleinsten Abstand zu der dem Spannkörper (31) in Zugrichtung am nächsten gelegenen Stelle (35) des Führungsbolzens (22) ist und
- - deren Abstand von der Zylinderachse (33) des Spannkörpers (31) vom Rand (37) der Abflachung (36) aus in Umfangsrichtung betrachtet bis auf einen Größtwert stetig zunimmt,
- - - wobei dieser Größtwert mindestens gleich dem größten Abstand zu der dem Spannkörper (31) in Zugrichtung am nächsten gelegenen Stelle (35) des Führungsbolzens (22) ist,
- der Spannkörper (31) weist wenigstens an beiden Seiten außerhalb des Längenabschnittes mit der Abflachung (36) eine kreiszylindrische Führungsfläche (39) auf, die auf das Führungsloch (32) am Grundkörper (11) abgestimmt ist.

2. Teilbares Werkzeug nach Anspruch 1, **gekennzeichnet** durch das Merkmal:
- die Umfangs-Rampenfläche (38) schließt an demjenigen Rand (37) der Abflachung (34) an, der in der Zugrichtung gelegen ist.

3. Teilbares Werkzeug nach Anspruch 1 oder 2, **gekennzeichnet** durch das Merkmal:
- am Spannkörper (31) ist im Längenabschnitt mit der Abflachung (34) der außerhalb der Abflachung (34) und der Umfangs-Rampenfläche (38) gelegene Umfangsbereich als Kreiszylinderfläche ausgebildet, die den gleichen Halbmesser wie die benachbarten Führungsflächen (37) hat.

4. Teilbares Werkzeug nach einem der Ansprüche 1 bis 3, **gekennzeichnet** durch das Merkaml:
- am Führungsbolzen (22) ist zumindest in demjenigen Längenabschnitt, der in Zugrichtung an die Spannfläche (28) anschließt, eine Abflachung (36) vorhanden, die parallel zur Zylinderachse (33) des Spannkörpers (31) und dessen Abflachung (34) ausgerichtet ist.

5. Teilbares Werkzeug nach einem der Ansprüche 1 bis 4, **gekennzeichnet** durch die Merkmale:
- der Spannkörper (56) ist außerhalb des Längenabschnittes mit der Abflachung (61) und außerhalb seiner Führungsflächen entweder selbst am Umfang verzahnt oder mit einem Zahnrad oder einem verzahnten Segment (65) drehfest verbunden,
- mit der Umfangsverzahnung, dem Zahrad oder dem verzahnten Segment (65) kämmt eine Zahnstange (63), die mit einem Längsantrieb (64) gekoppelt ist, oder kämmt ein zweites Zahnrad oder ein zweites verzahntes Segment, das mit einem Drehantrieb gekoppelt ist.

6. Teilbares Werkzeug nach einem der Ansprüche 1 bis 5, **gekennzeichnet** durch die Merkmale:
- der Spannkörper (56) weist einen Bund (57) auf oder ist mit einer Scheibe drehfest verbunden, der bzw. die eine in Umfangsrichtung wirkende Anschlagfläche (58) hat,
- in der Bewegungsbahn dieser Anschlagfläche (58) ist am Grundkörper (51) an derjenigen Stelle ein Anschlagkörper (59) vorhanden, die derjenigen Drehstellung des Spannkörpers (56) entspricht, in der seine Abflachung (61) parallel zur Längsachse des Führungsbolzens (55) ausgerichtet ist.

7. Teilbares Werkzeug nach einem der Ansprüche 1 bis 6, mit einer Drehsicherung zwischen dem Grundkörper und dem Werkzeugkopf, **gekennzeichnet** durch die Merkmale:
- die Drehsicherung (125) weist einen Positionierstift (127) und eine Positionierbüchse (126) auf, von denen der eine Teil (126) am Grundkörper (111) und der andere Teil (127) am Werkzeugkopf (112) angeordnet ist und nach einer gemeinsamen Fluchtlinie (139) ausgerichtet ist, welche ihrerseits parallel zu den Führungsflächen (116; 121) des Grundkörpers (111) und des Werkzeugkopfes (112) ausgerichtet ist,

-die Positionierbüchse (126) weist ein Aufnahmeloch (141) auf, das in zwei zumindest annähernd diametral gelegenen Umfangsbereichen je eine Anlagefläche (151; 152) für den Positionierstift (127) aufweist, deren Mantellinien zur gemeinsamen Fluchtlinie (139) ausgerichtet sind,

- die Flächennormale der beiden Anlageflächen (151; 152) hat zumindest eine Komponente, die in Richtung der Kraftwirkungslinie derjenigen Kraft des Positionierstiftes (127) ausgerichtet ist, die von dem Drehmoment hervorgerufen wird, das aufgrund der Anordnung der Werkzeugschneide (114) am Werkzeugkopf (112) zwischen diesem und dem Grundkörper (111) auftritt,

- die beiden Anlageflächen (151; 152) der Positionierbüchse (126) haben einen bestimmten lichten Abstand (D1),

- im Umfangsbereich derjenigen Anlagefläche (151), die in der entgegengesetzten Richtung zur Kraftrichtung der Momentenkraft des Positionierstiftes (127) gelegen ist, ist zwischen der Außenseite der Wand (147) der Positionierbüchse (126) und der ihr benachbarten Wand (146) des sie tragenden Werkzeugteils (111) ein gewisser gegenseitiger Abstand (A) vorhanden,

- der Positionierstift (127) weist in zwei Umfangsbereichen je eine Anlagefläche (153; 154) auf, deren geometrische Form, Anordnung und Ausrichtung zumindest zum Teil auf die beiden Anlageflächen (151; 152) der Positionierbüchse (126) abgestimmt sind,

- der Außenabstand (D2) dieser Anlageflächen (153; 154) ist um ein gewisses Maß größer als der in der gleichen Richtung gemessene lichte Abstand (D1) der beiden Anlageflächen (151; 152) der Positionierbüchse (126).

8. Teilbares Werkzeug nach Anspruch 7, gekennzeichnet duch die Merkmale:
- die Anlageflächen (151; 152) der Positionierbüchse (126) werden durch entsprechende Umfangsabschnitte einer umlaufenden Kreiszylinderfläche gebildet,

-die Anlageflächen (153; 154) des Positionierstiftes (127) werden ebenfalls durch entsprechende Umfangsabschnitte einer Kreiszylinderfläche gebildet, wobei in den Umfangsbereichen zwischen den beiden Anlageflächen (153; 154) die Außenflächen einen geringeren Abstand von der gemeinsamen Fluchtlinie (139) als die Anlageflächen (153; 154) haben und bevorzugt durch je zwei dachförmig verlaufende Abflachungen (155; 156) gebildet werden, die symmetrisch zur Mittelebene der Anlageflächen (153; 154) angeordnet sind.

9. Teilbares Werkzeug nach Anspruch 7 oder 8, gekennzeichnet durch das Merkmal:
- im Umfangsbereich mit dem Abstand (A) zwischen der Wand (147) der Positionierbüchse (126) und der Wand (146) des sie tragenden Werkzeugteils (111) hat entweder der betreffende Flächenabschnitt der Positionierbüchse (126) und/oder der betreffende Flächenabschnitt der Wand (146) des sie tragenden Werkzeugteils (111) einen Querversatz, gegebenenfalls einen Mittenversatz seiner Zylinderachse (148), gegenüber der gemeinsamen Fluchtlinie (139).

10. Teilbares Werkzeug nach einem der Ansprüche 7 bis 9,
gekennzeichnet durch die Merkmale:
- derjenige Lägenabschnitt (144) der Positionierbüchse (126), der den Positionierstift (127) aufnimmt, ist von einem anschließenden weiteren Längenabschnitt (143) durch einen Querschlitz (149) teilweise abgetrennt, der in demjenigen Umfangsbereich angebracht ist, in dem die Wand (147) der Positionierbüchse (126) und die Wand (146) des sie tragenden Werkzeugteils (111) einen gegenseitigen Abstand haben, und der in diesem Umfaigsbereich von der Außerseite bis zur Innenseite der Positionierbüchse (126) durchgeht,

- bei dem weiteren Längenabschnitt (143) der Positionierbüchse (126) ist zwischen dessen Wand (145) und der Wand (146) des sie tragenden Werkzeugteils (111) ein gegenseitiger Abstand nicht vorhanden, bevorzugt hingegen ein geringes Übermaß.

11. Teilbares Werkzeug nach einem der Ansprüche 1 bis 4, gekennzeichnet durch das Merkmal:
- zu beiden Seiten des Umfangbereiches mit dem Abstand zwischen der Wand (147) der Positionierbüchse (126) und der Wand (146) des sie tragenden Werkzeugteils (111) ist, bevorzugt an der Positionierbüchse (126), je eine vorzugsweise parallel zur gemeinsamen Fluchtlinie (139) ausgerichtete Ausnehmung, insbesondere in Form einer Längsnut, vorhanden.

12. Teilbares Werkzeug nach einem der Ansprüche 2 bis 5, gekennzeichnet durch das Merkmal:
- die Positionierbüchse (126) ist in dem sie tragenden Werkzeugteil (111) um wenigstens 180° drehbar angeordnet.

## Claims

1. Divisible tool (10) with the features:
- there is present a basic member (11) which serves for the securing on a machine tool, and a tool head (12) which carries the cutting edge of the tool (14),
- the basic member (11) and the tool head (12) are separable from one another and are connectable with one another by means of a coupling device (13),
- the coupling device (13) has guide surfaces and clamping surfaces on the parts of the basic member (11) and of the tool head (12) which are movable relatively to one another,
- the guide surface (16) on the basic member (11) is constructed as the peripheral surface of a guide hole (17) with straight parallel cylinder generator lines,
- the guide surface (21) on the tool head (12) is constructed as the peripheral surface of a guide bolt (22) adapted to correspond thereto,

- for the rotatable mounting of a clamping member (31) there is present on the basic member (11) a cylindrically circular guide hole (32) whose cylinder axis (33)

- - is aligned at right angles in relation to the longitudinal axis (18) of the guide bolt (22),

- - is spaced apart from the longitudinal axis (18) of the guide bolt (22), in the radial direction, by a distance which is equal to, or smaller than, the distance which separates the cylinder axis (29) of the clamping surface (28) from the longitudinal axis (18) of the guide bolt (22), and

- - is offset in the axial direction, in relation to the cylinder axis (29) of the clamping surface (28) on the guide bolt (22), by a certain amount (m) in the clamping direction,

- on the guide bolt (22) of the tool head (12) the clamping surface (28) is constructed as a section of a cylindrically circular surface,

- - whose cylinder axis (29) is aligned at right angles to the longitudinal axis (18) of the guide bolt (22),

- on the basic member (11), the clamping surface (38) is constructed as a part of the exterior surface of the clamping member (31),

- the clamping member (31) has, in a longitudinal section whose length is at least equal to that of the longest cylinder generator line of the clamping surface (28) on the guide bolt (22), a flattened portion (34),

- - which is aligned parallel to the cylinder axis (33) of the clamping member (31), and

- - whose distance (n) from the cylinder axis (33) of the clamping member (31) is, at most, equal to that distance existing between the cylinder generator line (35) of the guide bolt (22) which is situated on the guide bolt (22) in the direction of traction beyond the clamping member (31) and is situated nearest to the clamping member in the radial direction, and the cylinder axis (33) of the clamping member (31),

- on the clamping member (31), the clamping surface is formed by a peripheral ramp surface (38) which is adjacent on one edge (37) of the flattened portion (34),

- - and whose distance from the cylinder axis (33) of the clamping member (31) on the edge (37) of the flattened portion (34) has a minimum value,

-- this minimum value being, at most, equal to the minimum distance in relation to the place (35) of the guide bolt (22) which is situated nearest to the clamping member (31) in the direction of traction, and

-- whose distance from the cylinder axis (33) of the clamping member (31), viewed in the peripheral direction starting out from the edge (37) of the flattened portion (36), decreases constantly up to a maximum value,

-- this maximum value being at least equal to the maximum distance in relation to the place (35) of the guide bolt (22) which is situated nearest to the clamping member (31) in the direction of traction,

- the clamping member (31) has on both sides outside the longitudinal section with the flattened portion (36) at least one cylindrically circular guide surface (39) which is adapted to correspond to the guide hole (32) on the basic member (11).

2. Divisible tool according to Claim 1, characterised by the feature:

- the peripheral ramp surface (38) is adjacent to that edge (37) of the flattened portion (34) which is situated in the direction of traction.

3. Divisible tool according to Claim 1 or 2, characterised by the feature:

- on the clamping member (31), in the longitudinal section with the flattened portion (34), the peripheral region which is situated outside the flattened portion (34) and the peripheral ramp surface (38) is constructed as a cylindrically circular surface which has the same radius as the adjacent guide surfaces (37).

4. Divisible tool according to any one of the Claims 1 to 3, characterised by the feature:

- on the guide bolt (22) there is present, at least in that longitudinal section which is adjacent to the clamping surface (28) in the direction of traction, a flattened portion (36) which is aligned parallel to the cylinder axis (33) of the clamping member (31) and its flattened portion (34).

5. Divisible tool according to any one of the Claims 1 to 4, characterised by the features:

- the clamping member (56), outside the longitudinal section with the flattened portion (61) and outside its guide surfaces, is either itself toothed on the periphery, or is rotation-rigidly connected with a toothed wheel or with a toothed segment (65),

- with the peripheral toothing, with the toothed wheel, or with the toothed segment (65), there meshes a rack (63) which is coupled with a longitudinal drive (64); or a second toothed wheel, or a second toothed segment which is coupled with a rotary drive, meshes therewith.

6. Divisible tool according to any one of the Claims 1 to 5, characterised by the features:

- the clamping member (56) has a collar (57), or is rotation-rigidly connected with a disc, said collar or said disc having a stop face (58) which acts in the peripheral direction.

- in the path of movement of this stop face (58) there is present on the basic member (51), at that place, a stop member (59) which corresponds to that rotational position of the clamping member (56) wherein its flattened portion (61) is aligned parallel to the longitudinal axis of the guide bolt (55).

7. Divisible tool according to any one of the Claims 1 to 6, with an anti-rotation securing means between the basic member and the tool head, characterised by the features:

- the anti-rotation securing means (125) has a positioning pin (127) and a positioning bush (126), whereof the one part (126) is arranged on the basic member (111) and the other part (127) is arranged on the tool head (112) and is aligned along a common line of alignment (139) which itself is aligned parallel to the guide surfaces (116; 121) of the basic member (111) and of the tool head (112),

- the positioning bush (126) has a receiving hole (141) which has, in two at least approximately diametrically-located peripheral regions, in each case, for the positioning pin (127), a bearing surface (151; 152) whose cylinder generator lines are aligned parallel to the common line of alignment (139),

- the surface normal of the two bearing surfaces (151; 152) has at least one component which is aligned in the direction of the force-action line of that force of the positioning pin (127) which is produced by the torque which occurs as a result of the arrangement of the cutting edge of the tool (114) on the tool head (112) between this latter and the basic member (111),

- the two bearing surfaces (151; 152) of the positioning bush (126) are spaced apart by a particular inside width (D1),

- in the peripheral region of that bearing surface (151) which is situated in the direction opposite to the direction of force of the torque force of the positioning pin (127), there is present, between the outside of the wall (147) of the positioning bush (126) and the wall (146), adjacent thereto, of the tool part (111) which carries it, a certain mutual spacing distance (A),

- the positioning pin (127) has, in two peripheral regions, in each case, a bearing surface (153; 154) whose geometrical shape, arrangement, and alignment are adapted to correspond at least partially to the two bearing surfaces (151; 152) of the positioning bush (126),

- the outside spacing distance (D2) of these bearing surfaces (153; 154) is to a certain extent larger than the inside spacing distance (D1) - measured in the same direction - of the two bearing surfaces (151; 152) of the positioning bush (126).

8. Divisible tool according to Claim 7, characterised by the features:

- the bearing surfaces (151; 152) of the positioning bush (126) are formed by corresponding peripheral sections of a cylindrically circular surface which extends all the way round,

- the bearing surfaces (153; 154) of the positioning pin (127) are likewise formed by corresponding peripheral sections of a cylindrically circular surface, whereby, in the peripheral regions between the two bearing surfaces (153; 154), the outside surfaces are spaced apart from the common line of alignment (139) by a smaller distance than are the bearing surfaces (153; 154), and preferably are formed in each case by two roof-shapedly extending flattened portions (155; 156) which are arranged symmetrically to the central plane of the bearing surfaces (153; 154).

9. Divisible tool according to Claim 7 or 8, characterised by the feature:

- in the peripheral region with the spacing distance (A) between the wall (147) of positioning bush (126) and the wall (146) of the tool part (111) which carries it, either the pertaining surface section of the positioning bush (126), and/or the pertaining surface section of the wall (146) of the tool part (111) which carries it, has a transverse displacement, optionally a central displacement, of its cylinder axis (148), in relation to the common line of alignment (139).

10. Divisible tool according to any one of the Claims 7 to 9, characterised by the features:

- that longitudinal section (144) of the positioning bush (126) which receives the positioning pin (127) is partially separated from an adjacent further longitudinal section (143) by means of a transverse slot (149) which is arranged in that peripheral region wherein the wall (147) of the positioning bush (126) and the wall (146) of the tool part (111) which carries it are mutually spaced apart, said transverse slot (149) extending through, in this peripheral region, from the outside to the inside of the positioning bush (126),

- in the further longitudinal section (143) of the positioning bush (126) there is not present, between its wall (145) and the wall (146) of the tool part (111) which carries it, a mutual spacing distance, on the contrary preferably a slight oversizing.

11. Divisible tool according to any one of the Claims 1 to 4, characterised by the feature:

- on both sides of the peripheral region with the spacing distance between the wall (147) of the positioning bush (126) and the wall (146) of the tool part (111) which carries it, preferably on the positioning bush (126), there is present in each case a recess which preferably is aligned parallel to the common line of alignment (139) and which is, in particular, in the form of a longitudinal groove.

12. Divisible tool according to any one of the Claims 2 to 5, characterised by the feature:

- the positioning bush (126) is arranged so as to be rotatable by at least 180° in the tool part (111) which carries it.

**Revendications**

1. Outil divisible (10) caractérisé:

- en ce qu'il comporte un corps de base (11) servant pour la fixation sur une machine-outil et une tête d'outil (12) supportant un tranchant d'outils (14),

- en ce que le corps de base (11) et la tête d'outil (12) sont dissociables l'un de l'autre et peuvent être assemblés ensemble au moyen d'un dispositif de couplage (13),

- en ce que le dispositif de couplage (13) présente des surfaces de guidage et des surfaces de serrage sur les parties mobiles entre elles du corps de base (11) et de la tête d'outil (12),

- en ce que la surface de guidage (16) sur le corps de base (11) est constituée par la surface de périphérie d'un trou de guidage (17) avec des génératrices droites parallèles,

- en ce que la surface de guidage (21) sur la tête d'outil (12) est constituée par la surface périphérique d'une broche-guide (22) adaptée à cet effet,

- en ce qu'il se trouve, sur le corps de base (11) pour la monture libre en rotation d'un corps de serrage (31), un trou de guidage (32) cylindrique circulaire dont l'axe du cylindre (35),

- en ce qu'il est aligné perpendiculairement à l'axe longitudinal (18) de la broche-guide (22),

- en ce qu'il est en direction radiale à une distance à l'axe longitudinal (18) de la broche-guide (22) qui est égale ou inférieure à la distance de l'axe du cylindre (29) de la surface de serrage (28) à l'axe longitudinal de la broche-guide (22),

- en ce qu'il est en direction axiale décalé d'une cote déterminée (m) en direction du serrage par rapport à l'axe du cylindre (29) de la surface de serrage (28) de la broche-guide (22),

- en ce que la broche-guide (22) de la tête d'outil (12) la surface de serrage (28) est constituée comme un segment d'une surface cylindrique circulaire, dont l'axe du cylindre (29) est aligné perpendiculairement à l'axe longitudinal (18) de la broche-guide (22),

- en ce que sur le corps de base (11), la surface de serrage (38) est constituée comme une partie de la surface extérieure du corps de serrage (31),

- en ce que le corps de serrage (31) présente sur un segment longitudinal qui est au moins aussi long que la génératrice la plus longue de la surface de serrage (28) du boulon de guidage (22) un aplatissement (34),

- en ce qu'il est aligné parallèlement à l'axe du cylindre (33) du corps de serrage (31),

- en ce que la distance (n) à l'axe du cylindre (33) du corps de serrage (31) est au plus égale à la distance de la génératrice (35) de la broche guide (22), située en direction de la traction de l'autre côté du corps de serrage et étant plus proche du corps de serrage en direction radiale, à l'axe du cylindre (33) du corps de serrage (31),

- en ce que sur le corps de serrage (31), la surface de serrage est constituée par une surface de rampe (38) se raccordant à un bord de l'aplatissement (34),

- en ce que la distance à l'axe du cylindre (33) du corps de serrage (31) a sur le bord (37) de l'aplatissement (34) une valeur minimale,

- en ce que la valeur minimale est plus égale à la plus petite distance à l'endroit (35) de la broche guide (22) situé le plus près possible du corps de serrage (31) en direction de la traction et

- en ce que la distance à l'axe du cylindre (33) du corps de serrage augmente continuellement depuis le bord de l'aplatissement (36) jusqu'à une valeur maximale, en regardant en direction de la périphérie,

- en ce que la valeur maximale est au moins égale à la plus grande distance à l'endroit (35) de la broche-guide (22) situé le plus près du corps de serrage (31) en direction de la traction,

- en ce que le corps de serrage (31) présente au moins sur deux faces, en dehors du segment longitudinal avec l'aplatissement (36) une surface de guidage cylindrique circulaire (39) qui est adaptée au trou de guidage (32) du corps de base (11).

2. Outil divisible selon la revendication 1, caractérisé en ce que la surface de rampe périphérique (38) se raccorde au bord (37) de l'aplatissement (34) qui est situé dans la direction de traction.

3. Outil divisible selon la revendication 1 ou 2, caractérisé en ce qu'il est constitué sur le corps de serrage (31), sur le segment longitudinal avec l'aplatissement (34) une zone de périphérie sous forme de surface cylindrique circulaire située en dehors de l'aplatissement (34) et de la surface de rampe périphérique (38), qui a le même rayon que les surfaces de guidage voisins (37).

4. Outil divisible selon l'une des revendications 2 à 3, caractérisé en ce qu'il existe sur la broche-guide (22) au moins sur le segment longitudinal, qui se raccorde dans la direction de traction à la surface de serrage (28) un aplatissement (36) qui est orienté parallèlement à l'axe du cylindre (33) du corps de serrage (31) et à son aplatissement (34).

5. Outil divisible selon l'une des revendications 1 à 4, caractérisé en ce que le corps de serrage (56) est soit denté lui-même sur son pourtour, en dehors du segment longitudinal avec l'aplatissement (61) et en dehors de ses surfaces de guidage, soit relié bloqué en rotation avec une roue dentée ou un segment denté (65), engrène une crémaillère (63) qui est couplée avec un entraînement longitudinal (64) avec la denture de pourtour, la roue denté ou le segment denté (65) ou bien engrène une deuxième roue dentée ou un deuxième segment denté qui est couplé avec un entraînement tournant.

6. Outil divisible selon l'une des revendications 1 à 5, caractérisé en ce que le corps de serrage présente un collet (57) ou est relié bloqué en rotation à un disque qui a une ou l'une de ses surfaces d'arrêt (58) agissant en direction périphérique et qu'il existe sur le parcours de déplacement de cette surface d'arrêt (58) un corps de butée (59), sur le corps de base (51), à l'endroit qui correspond à la position de rotation du corps de serrage (56), dans laquelle son aplatissement (61) est aligné parallèlement à l'axe longitudinal de la broche-guide (55).

7. Outil divisible selon l'une des revendications 1 à 6, avec une sûreté contre la rotation entre le corps de base et la tête d'outil, caractérisé en ce que:

- la sûreté contre la rotation (125) présente une cheville de positionnement (127) et une douille de positionnement (126), dont l'une des parties (126) est disposée sur le corps de base (111) et l'autre partie (127) sur la tête d'outil (112), avec alignement sur une ligne de fuite commune (139), laquelle est pour sa part alignée parallèlement aux

surfaces de guidage (116, 121) du corps de base (111) et de la tête d'outil (112); la douille de positionnement (126) présente un trou de réception (141) lequel présente respectivement dans au moins deux zones périphériques approximativement situées en diagonale une surface d'appui (152, 152) pour la cheville de positionnement (127) dont les génératrices sont alignées parallèlement à la ligne de fuite commune (139); la normale à la surface des deux surfaces d'appui (151, 152) a au moins une composante qui est alignée suivant la direction de la ligne d'effet dynamique de la force de la cheville de positionnement (127) qui est suscitée par le couple qui intervient, par suite de la disposition du tranchant d'outil (114) sur la tête d'outil (112), entre celle-ci et le corps de base (111); ces deux surfaces d'appui (152, 152) de la cheville de positionnement (126) ont un écart intérieur déterminé (D1); il existe, dans la zone périphérique de la surface d'appui (151) qui est située en direction opposée de la direction de la force du moment de la cheville de positionnement (127), une certaine distance mutuelle (A) entre la face extérieure de la paroi (147) et la douille de positionnement (126) et la paroi voisine de la partie d'outil (11) la supportant; la cheville de positionnement (127) présente respectivement dans deux zones périphériques une surface d'appui (152, 154) dont la forme géométrique, la disposition et l'alignement sont adaptés au moins en partie avec deux surfaces d'appui (151, 152) de la douille de positionnement (126); et la distance extérieure (D2) de ces surfaces d'appui (153, 154) est plus grande d'une cote déterminée que la distance intérieure (D1) mesurée dans la même direction des deux surfaces d'appui (151, 152) du manchon de positionnement (126).

8. Outil divisible selon la revendication 7, caractérisé en ce que les surfaces d'appui (153, 154) de la cheville de positionnement (127) sont également constituées par des segments périphériques appropriés d'une surface cylindrique circulaire, tels que dans les zones périphériques entre les deux surfaces d'appui (153, 154), les surfaces extérieures se trouvent à une moindre distance de la ligne de fuite commune (139) que les surfaces d'appui (153, 154) et soient de préférence respectivement constituées par deux aplatissements (155, 156) en forme de toit qui sont disposés symétriquement par rapport au plan médian des surfaces d'appui (153, 154).

9. Outil divisable selon la revendication 7 ou 8, caractérisé en ce que, dans la zone périphérique comportant la distance (A) entre la paroi (147) de la douille de positionnement (126) et la paroi (146) de la partie d'outil (111) la supportant, le segment de surface, correspondant de la douille de positionnement (126) et/ou le segment de surface correspondant de la paroi (146) de la partie d'outil (111) la supportant, a un déplacement transversal, le cas échéant, un mésalignement médian de son axe de cylindre (148) par rapport à la ligne de fuite commune (139).

10. Outil divisible selon l'une des revendications 7 à 9, caractérisè en ce que le segment longitudinal (144) de la douille de positionnement (126) qui reçoit la cheville de positionnement (127) est en partie séparé d'un autre segment longitudinal (143) qui s'y raccorde par une fente transversale (149) qui est aménagée dans la zone périphérique dans laquelle la paroi (147) de la douille de positionnement (126) et la paroi (146) de la partie d'outil (111) supportant celle-ci ont entre elles une certaine distance, ladite fente s'étendant dans cette zone périphérique de la face extérieure à la face intérieure de la douille de positionnement (126), et que sur l'autre segment longitudinal (143) de la douille de positionnement, sa paroi (145) et la paroi (146) de la partie d'outil (111) supportant celle-ci ne présentent pas de distance entre elles mais au contraire or léger surdimensionnement de préférence.

11. Outil divisible selon l'une des revendications 1 à 4, caractérisé en ce qu'il existe respectivement sur les deux côtés de la zone périphérique comportant une distance entre la paroi (147) de la douille de positionnement (126) et la paroi (146) de la partie d'outil (111) supportant celle-ci, de préférence, sur la douille de positionnement (126), un évidement aligné, de préférence, parallèlement à la ligne de fuite commune (139), notamment sous forme d'une rainure longitudinale.

12. Outil divisible selon l'une des revendications 2 à 5, caractérisé en ce que la douille de positionnement (126) est disposée avec une liberté de rotation d'au moins 180° dans la partie d'outil (111) la supportant.

Fig. 1

Fig. 2

Fig. 3

Fig. 4

Fig. 6

Fig. 7

Fig. 8

Fig. 9

Fig. 10

Fig. 11

5

Fig. 15

Fig. 14

Fig. 13

Fig. 12